(19) Europäisches Patentamt / European Patent Office / Office européen des brevets

(11) **EP 3 420 529 B1**

(12) **FASCICULE DE BREVET EUROPEEN**

(45) Date de publication et mention de la délivrance du brevet:
**22.01.2020 Bulletin 2020/04**

(21) Numéro de dépôt: **17710355.3**

(22) Date de dépôt: **23.02.2017**

(51) Int Cl.:
*G06T 5/00* (2006.01)  *B60R 1/00* (2006.01)
*G06T 11/00* (2006.01)  *G06T 3/40* (2006.01)
*G06T 11/60* (2006.01)

(86) Numéro de dépôt international:
**PCT/FR2017/050409**

(87) Numéro de publication internationale:
**WO 2017/144826 (31.08.2017 Gazette 2017/35)**

(54) **PROCÉDÉ D'AIDE À LA CONDUITE EN MARCHE AVANT D'UN VÉHICULE AUTOMOBILE, MUNI D'UNE CAMÉRA À OBJECTIF DE TYPE FISH-EYE**

FAHRASSISTENZVERFAHREN IN EINEM VORWÄRTSGANG EINES KRAFTFAHRZEUGS MIT EINER KAMERA MIT FISCHAUGENLINSE

DRIVING ASSISTANCE METHOD IN A FORWARD GEAR OF A MOTOR VEHICLE, PROVIDED WITH A CAMERA HAVING A FISH-EYE LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2016 FR 1651490**

(43) Date de publication de la demande:
**02.01.2019 Bulletin 2019/01**

(73) Titulaire: **Renault S.A.S.**
**92100 Boulogne-Billancourt (FR)**

(72) Inventeur: **AMBROISE, Stephanie**
**78140 Velizy Villacoublay (FR)**

(56) Documents cités:
**EP-A1- 2 981 077      DE-A1-102005 051 777**
**DE-T5-112013 006 385      US-A1- 2005 174 429**

EP 3 420 529 B1

**Description**

L'invention a pour domaine technique les interfaces homme machine dans un véhicule automobile, et plus particulièrement les dispositifs d'aide au stationnement pour un véhicule automobile.

La vision à 360° est une nouvelle prestation chez Renault. Elle permet d'afficher sur un écran multimédia une description de l'environnement proche du véhicule, sous la forme d'une combinaison de plusieurs vues. Les caméras utilisées sont de type fish-eye, soit d'angle de vue horizontal proche de 180°.

Sur chaque type de vue, des gabarits statiques et/ou dynamiques sont superposés. Ils représentent la trajectoire prédictive du véhicule en fonction de l'angle des roues.

L'utilisation de caméras fish-eye présente l'inconvénient d'un champ de vision horizontal plus large que pour les caméras employées généralement en tant que caméra de recul. Les objets présents sur l'image acquise par une caméra fish-eye paraissent alors plus petits. Pour pouvoir combiner de telles images avec celles acquises par les caméras latérales pour former la vue à 360°, les images de caméras avant et arrière sont rognées.

A la différence de la vue arrière, compte-tenu du rognage de l'image, le gabarit intérieur de la vue avant est susceptible de ne pas être affiché pour des angles au volant élevé.

De l'état de la technique antérieure, on connaît les documents US20130321629, US2013057690, US2008266137 et EP2500216.

Les documents US20130321629, US2013057690 et US2008266137 ne divulguent pas d'information sur le champ de vision ni prise en compte de la distorsion.

Le document EP2500216 décrit un système d'assistance à la conduite réalisant un affichage dynamique des images prises par des caméras grand angle ayant une couverture de 180°. Il n'est pas décrit l'aspect affichage de gabarit ou de rognage de l'image.

Le document EP2981077 décrit un dispositif de surveillance d'un environnement véhicule équipé d'une unité de stockage qui stocke des données d'image photographique délivrées à partir d'une unité de photographie qui photographie une région comprenant la surface de roulement dans la direction de déplacement d'un véhicule, et la région au-dessus de cette surface de roulement et une unité de sortie qui délivre des données d'image photographique à une unité d'affichage. L'angle au volant est déterminé afin d'estimer la direction des roues pour pouvoir l'afficher sur l'unité d'affichage. Ce dispositif ne garantit pas que les détails importants pour le conducteur soient affichés.

Il existe donc un besoin pour un procédé d'aide à la conduite en marche avant d'un véhicule automobile apte à générer une image améliorée par rapport à l'état de la technique et comprenant la trajectoire des roues avant du véhicule en superposition avec l'image issue d'une caméra de type Fish-Eye.

L'invention a pour objet un procédé d'aide à la conduite en marche avant d'un véhicule automobile, muni d'un capteur d'angle des roues avant, d'un écran d'affichage et d'une caméra à objectif de type fish-eye disposée à l'avant du véhicule et dirigée de façon colinéaire à la direction longitudinale du véhicule de sorte à acquérir des images à l'avant du véhicule. Le procédé comprend les étapes suivantes :

on détermine la trajectoire des roues avant du véhicule en fonction de l'angle des roues avant et des caractéristiques du véhicule, qui sont définies dans la revendication 1,
on détermine une valeur de rognage de l'image acquise par la caméra en fonction des trajectoires des roues avant, de l'angle du volant, de la dimension du capteur de la caméra et de la dimension de l'écran d'affichage,
on détermine l'image rognée acquise par la caméra à afficher sur l'écran d'affichage en fonction de la trajectoire des roues avant et de la valeur de rognage, et
on affiche la trajectoire des roues avant du véhicule en superposition de l'image rognée sur l'écran d'affichage.

Pour déterminer le rognage des trajectoires des roues avant lorsque l'angle des roues avant est strictement négatif, le procédé peut comprendre les étapes suivantes :

on détermine si la coordonnée, selon un axe parallèle au sol et perpendiculaire à la direction longitudinale du véhicule, du premier point de la trajectoire gauche est supérieure à la coordonnée correspondante du dernier point de la trajectoire gauche,
si tel est le cas, on détermine que la valeur de rognage est égale à une valeur prédéterminée,
si tel n'est pas le cas, on détermine que la valeur de rognage est égale à la moitié de la coordonnée, selon un axe parallèle au sol et perpendiculaire à la direction longitudinale du véhicule, du dernier point de la trajectoire gauche.

Pour déterminer le rognage des trajectoires des roues avant lorsque l'angle des roues avant est strictement positif, le procédé peut comprendre les étapes suivantes :

on détermine si la coordonnée, selon un axe parallèle au sol et perpendiculaire à la direction longitudinale du véhicule, du premier point de la trajectoire droite est supérieure à la coordonnée correspondante du dernier point de la trajectoire droite,

si tel est le cas, on détermine que la valeur de rognage est égale à une valeur prédéterminée,

si tel n'est pas le cas, on détermine que la valeur de rognage est égale à la plus grande valeur parmi la différence entre la coordonnée, selon un axe parallèle au sol et perpendiculaire à la direction longitudinale du véhicule, du dernier point de la trajectoire gauche et la largeur en pixels de l'image attendue après rognage pour affichage, et, la moitié de la différence entre la largeur en pixels de l'image issue de la caméra avant rognage et la coordonnée, selon un axe parallèle au sol et perpendiculaire à la direction longitudinale du véhicule, du dernier point de la trajectoire gauche.

Si la valeur de rognage est égale à la valeur d'initialisation, on peut rogner l'image acquise par la caméra de la valeur de rognage de chaque côté, et, si la valeur de rognage n'est pas égale à la valeur d'initialisation, on peut rogner l'image acquise par la caméra de la valeur de rognage à gauche et de la largeur en pixels de l'image issue de la caméra avant rognage moins la somme de la valeur de rognage et de la largeur en pixels de l'image attendue après rognage pour affichage à droite.

Pour déterminer la trajectoire des roues avant du véhicule, le procédé peut comprendre les étapes suivantes :

on détermine dans le plan d'appui des roues du véhicule les coordonnées des points de la trajectoire des roues avant du véhicule en fonction de la largeur du véhicule, de la distance entre l'essieu avant et le point le plus avancé du véhicule, de l'empattement des roues avant, et de l'angle de la roue,

on détermine ensuite la projection de chaque point des trajectoires dans le plan d'appui des roues du véhicule sur une sphère dont le centre est fonction des coordonnées du centre de la caméra et de l'angle d'inclinaison de la caméra avec l'horizontale, et

on détermine ensuite la projection des points des trajectoires projetés sur la sphère sur le plan focal unitaire défini comme normal à l'axe de prise de vue de la caméra et situé à une distance de la caméra égale à la distance focale de la caméra.

On peut réaliser une transformation affine des points des trajectoires dans le plan focal unitaire en fonction de la taille horizontale du capteur de la caméra, de la taille verticale du capteur de la caméra, du nombre de pixels du capteur de la caméra selon la direction horizontale et du nombre de pixels du capteur de la caméra selon la direction verticale.

D'autres buts, caractéristiques et avantages de l'invention apparaîtront à la lecture de la description suivante, donnée uniquement à titre d'exemple non limitatif.

Le procédé comprend une première étape au cours de laquelle on détermine les trajectoires droite et gauche à afficher sur l'image reconstruite.

Pour cela, on définit d'abord le $R_{br}$ de l'essieu.

$$R_{br} = \left| Emp * \tan\left(90 - \alpha_{roue}\right) \right| \qquad (\text{Eq. 1})$$

Avec

Rbr = Rayon de braquage
Emp = Empattement
$\alpha_{roue}$ = Angle roue

Pour la trajectoire droite, on définit un point Pdyn2 de coordonnées (Xdyn2, Ydyn2), obtenues par les équations suivantes :

$$\text{Xdyn2} = -(R_{br} - \text{distance\_axe\_y\_roue})*\sin(X\_stat / R_{br})$$
$$\text{Ydyn2} = -(R_{br} - (R_{br} - \text{distance\_axe\_y\_roue})*\cos((X\_stat)/R_{br})) \qquad (\text{Eq. 2})$$

Avec :

distance_axe_y_roue = (width /2) + 250 mm
Width : largeur du véhicule
X_stat = FrontOverHang : distance entre l'essieu avant et le point le plus avancé du véhicule

Pour la trajectoire gauche, on définit un point Pdyn de coordonnées (Xdyn, Ydyn), obtenues par les équations suivantes :

$$Xdyn = -(R_{br} + distance\_axe\_y\_roue)*sin(X\_stat / R_{br})$$
$$Ydyn = (-R_{br} + (R_{br} + distance\_axe\_y\_roue)*cos((X\_stat)/R_{br})) \quad (Eq. 3)$$

L'abscisse Xd d'un point de la trajectoire gauche est donnée par l'équation suivante :

$$Xd = Rdyn1*sin(\theta) - R*sin(\theta) + Emp \qquad (Eq. 4)$$

Si l'angle du volant est strictement négatif, l'ordonnée Yd d'un point de la trajectoire gauche est donnée par l'équation suivante :

$$Yd = -(R_{br} - Rdyn1*cos(\theta) + R*cos(\theta)) \qquad (Eq. 5)$$

Si l'angle du volant est strictement positif, l'ordonnée Yd d'un point de la trajectoire gauche est donnée par l'équation suivante :

$$Yd = (R_{br} - Rdyn1*cos(\theta) + R*cos(\theta)) \qquad (Eq. 6)$$

L'abscisse X2d d'un point de la trajectoire droite est donnée par l'équation suivante :

$$X2d = Rdyn2*sin(\theta2) - R*sin(\theta2) + Emp \qquad (Eq. 7)$$

Si l'angle du volant est strictement négatif, l'ordonnée Y2d d'un point de la trajectoire droite est donnée par l'équation suivante :

$$Y2d = -(R_{br} - Rdyn2*cos(\theta2) + R*cos(\theta2)) \qquad (Eq. 8)$$

Si l'angle du volant est strictement positif, l'ordonnée Y2d d'un point de la trajectoire droite est donnée par l'équation suivante :

$$Y2d = (R_{br} - Rdyn2*cos(\theta2) + R*cos(\theta2)) \qquad (Eq. 9)$$

Avec

$$Rdyn1 = \sqrt{(Rdyn01)^2 + (R_{br} + Ydyn)^2}; \qquad (Eq. 10)$$

$$Rdyn2 = \sqrt{(Rdyn02)^2 + (R_{br} + Ydyn2)^2}; \qquad (Eq. 11)$$

$$Rdyn01 = -Xdyn + Emp; \qquad (Eq. 12)$$

$$Rdyn02 = -Xdyn2 + Emp; \qquad (Eq. 13)$$

On discrétise ensuite chacune des trajectoires droite et gauche en une pluralité de points pour un paramètre $\theta$ variant entre $\theta\_min$ et $\theta\_max$, respectivement $\theta2$ variant entre $\theta2\_min$ et $\theta2\_max$ et pour un paramètre R variant entre Rmin et Rmax, avec Rmax-Rmin =e.

Avec :

$$\theta = \theta\_min + (\theta\_max - \theta\_min)/N*i;$$
$$\theta\_min = \left(-asin\left((Emp-Xdyn)/Rdyn1\right)\right);$$
$$\theta\_max = 180/\pi * \left(-3000/Rdyn1\right) + \theta\_min;$$

$$\theta2 = \theta\_min2 + (\theta\_max2 - \theta\_min2)/N*i; \qquad (Eq.14)$$

$$\theta\_min2 = \left(-asin\left((Emp-Xdyn2)/Rdyn2\right)\right);$$
$$\theta\_max2 = 180/\pi * \left(-3000/Rdyn2\right) + \theta\_min2$$

i : variant de 1 à N

$$R = -line\_width + 2*line\_width /M *j; \qquad (Eq.15)$$

j : variant de 1 à M

On note que les différentes fonctions trigonométriques employées dans le présent document sont appliquées à des angles exprimés en degrés et non en radians.

En d'autres termes, à l'issue de cette étape de calcul, on dispose d'un ensemble de points pour la trajectoire gauche Xd,Yd et d'un ensemble de points pour la trajectoire droite X2d,Y2d dépendant chacun de paramètres i, j variant respectivement entre 1 et N et entre 1 et M.

En fonction des trajectoires au sol (Xd,Yd) et (X2d,Y2d), on détermine ensuite la projection (X1,Y1) et (X2,Y2) de chaque point des trajectoires au sol sur une sphère de centre (Xs0,Ys0,Zs0) et de rayon 100mm.

On définit le centre de la sphère (Xs0,Ys0,Zs0) lorsque l'angle d'inclinaison de la caméra avec l'horizontale AngleCam est nul en fonction du centre de la caméra (Xcam,Ycam,Zcam) corrigé d'une valeur d sur l'axe x,

On a donc

$$Xs0=Xcam-d$$
$$Ys0=Ycam \qquad (Eq.16)$$
$$Zs0=Zcam$$

On définit le centre de la sphère (Xs,Ys,Zs) en tenant compte de l'angle d'inclinaison de la caméra avec l'horizontale AngleCam en fonction du centre de la caméra (Xcam,Ycam,Zcam) et des coordonnées du centre de la sphère (Xs0,Ys0,Zs0) lorsque l'angle d'inclinaison de la caméra avec l'horizontale AngleCam est nul,

$$Xs=Xcam-(Xcam-Xs0)*cos(Anglecam)$$
$$Ys=Ys0 \qquad (Eq.17)$$
$$Zs=Zs0-(Xcam-Xs0)*sin(Anglecam)$$

On réalise ensuite la projection de chaque point de chaque trajectoire sur la sphère S.

Pour la trajectoire gauche, on détermine les coordonnées (X1,Y1,Z1) de l'intersection I1 entre une ligne reliant le centre de la sphère avec un point P01(Xd,Yd,Z=0) de la trajectoire au sol, par l'intermédiaire des équations suivantes :

$$X1=(Xs1*(Z1-Zs)/Zs1)+Xs$$
$$Y1=(Ys1*(Z1-Zs)/Zs1)+Ys \qquad (Eq.18)$$
$$Z1=100/\sqrt{(Xs1/Zs1)^2+(Ys1/Zs1)^2+1}+Zs$$

Avec

$$Xs1=Xd-Xs$$
$$Ys1=Yd-Ys \qquad (Eq.19)$$
$$Zs1=-Zs-h$$

Avec h = hauteur entre le sol et l'axe du véhicule

Pour la trajectoire gauche, on applique une étape de calcul similaire. On détermine les coordonnées (X2,Y2, Z2) de l'intersection I2 entre une ligne reliant le centre de la sphère avec un point P02(X2d,Y2d,Z=0) de la trajectoire au sol, par l'intermédiaire des équations suivantes :

$$X2=(Xs2*(Z2-Zs)/Zs2)+Xs$$
$$Y2=(Ys2*(Z2-Zs)/Zs2)+Ys \qquad (Eq.20)$$
$$Z2=100/\sqrt{(Xs2/Zs2)^2+(Ys2/Zs2)^2+1}+Zs$$

Avec

$$Xs2=X2d-Xs$$
$$Ys2=Y2d-Ys \qquad (Eq.21)$$
$$Zs2=-Zs-h$$

Avec h = hauteur entre le sol et l'axe du véhicule

On détermine ensuite la projection des points des trajectoires projetés sur la sphère S sur le plan focal unitaire défini comme normal à l'axe de la caméra et à une distance fl=100mm.

Ce calcul étant complexe, on réalise la projection en deux étapes. On projette d'abord les points des trajectoires projetés sur la sphère S sur un plan vertical parallèle au plan $(\vec{Y};\vec{Z})$ à une distance de la caméra (Xcam,Ycam,Zcam) égale à la distance focale fl.

On projette ensuite les points des trajectoires projetés sur le plan vertical, sur le plan focal de la caméra.

Pour projeter les points de la trajectoire gauche projetés sur la sphère S sur un plan vertical, on détermine les coordonnées (Xp11,Yp11,Zp11) de l'intersection P11 entre la ligne reliant l'intersection I1 (X1,Y1,Z1) avec le centre de la caméra et le plan vertical. Les coordonnées (Xp11,Yp11,Zp1) sont données par les équations suivantes :

$$Xp1=Xcam-f$$
$$Yp1=\frac{(Y1-Ycam)*(Xp1-Xcam)}{X1-Xcam}+Ycam \qquad (Eq.22)$$
$$Zp1=\frac{(Z1-Zcam+h)*(Xp1-Xcam)}{X1-Xcam}+Zcam-h$$

Pour la trajectoire droite, on applique une étape de calcul similaire. Pour projeter les points de la trajectoire droite projetés sur la sphère S sur le plan vertical, on détermine les coordonnées (Xp2,Yp2,Zp2) de l'intersection P2 entre la ligne reliant l'intersection I2 (X2,Y2,Z2) avec le centre de la caméra et le plan vertical. Les coordonnées (Xp2, Yp2,Zp2) sont données par les équations suivantes :

$$Xp2=Xcam-f$$
$$Yp2=\frac{(Y2-Ycam)*(Xp2-Xcam)}{X2-Xcam}+Ycam \qquad (Eq.23)$$
$$Zp2=\frac{(Z2-Zcam+h)*(Xp2-Xcam)}{X2-Xcam}+Zcam-h$$

Pour projeter les points de la trajectoire gauche projetés sur le plan vertical sur le plan focal, on détermine les coordonnées (Xp21,Yp21,Zp21) de l'intersection P21 entre la ligne reliant l'intersection I1 (X1,Y1,Z1) avec le centre de la caméra et le plan focal.

$$Xp21=$$
$$Yp21=\frac{(Yp11-Ycam)*(Zp21-(Zcam-h))}{Zp11-(Zcam-h))}+Ycam \qquad (Eq.24)$$
$$Zp21=-f*\sin(AngleCam)+zss1*\cos(AngleCam)+Zcam-h$$

Avec :

$$zss1=\frac{(-f*\cos(AngleCam)+\dfrac{f*xpcam1}{zpcam1}\sin(AngleCam))}{\sin(AngleCam)+\dfrac{xpcam1}{zpcam1}\cos(AngleCam)} \qquad (Eq.25)$$

$$xpcam1=Xp11-Xcam$$
$$ypcam1=Yp11-Ycam$$
$$zpcam1=Zp11-(Zcam-h)$$

Pour projeter les points de la trajectoire gauche projetés sur le plan vertical sur le plan focal, on détermine les coordonnées (Xp22,Yp22,Zp22) de l'intersection P22 entre la ligne reliant l'intersection I2 (X2,Y2,Z2) avec le centre de la caméra et le plan focal.

$$Xp22=$$
$$Yp22=\frac{(Yp12-Ycam)*(Zp22-(Zcam-h))}{Zp12-(Zcam-h))}+Ycam \qquad (Eq.26)$$
$$Zp22=-f*\sin(AngleCam)+zss2*\cos(AngleCam)+Zcam-h$$

Avec :

$$zss2=\frac{(-f*\cos(AngleCam)+\dfrac{f*xpcam2}{zpcam2}\sin(AngleCam))}{\sin(AngleCam)+\dfrac{xpcam2}{zpcam2}\cos(AngleCam)} \qquad (Eq.27)$$

$$xpcam2=Xp12-Xcam$$
$$ypcam2=Yp12-Ycam$$
$$zpcam2=Zp12-(Zcam-h)$$

Pour la trajectoire gauche, on détermine ensuite les coordonnées (xp1,yp1) du point P21 dans le plan focal unitaire par application des équations suivantes :

$$xp1=(Yp21-Ycam)$$
$$yp1=\frac{-(Zp21-(Zcam-h)+f*\sin(AngleCam))}{\cos(AngleCam)} \qquad (Eq.28)$$

Pour la trajectoire droite, on détermine ensuite les coordonnées (xp2,yp2) du point P22 dans le plan focal unitaire par application des équations suivantes :

$$xp2 = (Yp22 - Ycam)$$
$$yp2 = \frac{-(Zp22 - (Zcam - h) + f*\sin(AngleCam))}{\cos(AngleCam)} \qquad (Eq.29)$$

On détermine ensuite des points transformés (Xepi,Yepi) de trajectoire gauche en réalisant une transformation affine des points (xp1,yp1) de trajectoire gauche projetés dans le plan focal en appliquant les équations suivantes :

$$Xepi = Int[(Width/Cx1)*xp1 + Width/2]$$
$$Yepi = Int[(Height/Cy1)*yp1 + Height/2] \qquad (Eq.30)$$

On détermine ensuite des points transformés (Xepi2,Yepi2) de trajectoire droite en réalisant une transformation affine des points (xp2,yp2) de trajectoire droite projetés dans le plan focal en appliquant les équations suivantes :

$$Xepi2 = Int[(Width/Cx1)*xp2 + Width/2]$$
$$Yepi2 = Int[(Height/Cy1)*yp2 + Height/2] \qquad (Eq.31)$$

Avec :

$$Cx1 = 100mm$$

$$Cy1 = Cx1*cy/cx$$

cx= Taille horizontale du capteur de la caméra selon la direction X
cy= Taille verticale du capteur de la caméra selon la direction Y
Width : nombre de pixels du capteur de la caméra selon la direction X
Height : nombre de pixels du capteur de la caméra selon la direction Y

En se référant à l'équation Eq.4 à Eq.14 introduisant les paramètres i et j, on comprendra que les équations Eq.16 à Eq.31 sont appliquées à chaque point de la trajectoire correspondant à un couple de paramètres (i,j). A l'issue de la première étape de calcul, on dispose ainsi d'une pluralité de points de la trajectoire droite (Xepi(i,j);Yepi(i,j)) et une pluralité de points de la trajectoire gauche (Xepi2(i,j);Yepi2(i,j)) projetés sur le plan focal de la caméra et transformés par transformation affine.

Au cours d'une deuxième étape 2, on détermine un paramètre de rognage.

Pour réaliser cela, on calcule la valeur du pixel à partir de laquelle ou jusqu'à laquelle rogner l'image pour chacune des trajectoires gauche et droite. Ces valeurs sont dynamiques car elles dépendent du signe et de la valeur de l'angle des roues.

Il s'agit par ailleurs de déterminer une valeur cohérente avec l'affichage des gabarits statiques, afin d'éviter des sauts d'image lorsqu'on passe de la valeur de rognage statique (correspondant aux valeurs d'angles au volant faibles) à la valeur de rognage dynamique.

En sortie de la première étape 1, les valeurs des coordonnées en pixels des points (Xepi(i,j);Yepi(i,j)) de la trajectoire gauche et des points (Xepi2(i,j); Yepi2(i,j)) de la trajectoire droite dans le plan focal sont disponibles.

Lorsque l'angle des roues est strictement négatif ou strictement positif, les valeurs critiques de pixels sont celles correspondant à la fin des trajectoires, soit celles correspondant aux couples de paramètres (i=N,j=M) et (i=1, j=1) définissant les points des trajectoires gauche et droite.

On nomme XepiNM, la valeur de la coordonnée Xepi du point de trajectoire gauche pour lequel le paramètre i=N, et le paramètre j=M.

On nomme Xepi2NM, la valeur de la coordonnée Xepi2 du point de trajectoire droite pour lequel le paramètre i=N, et le paramètre j=M.

On nomme Xepi11, la valeur de la coordonnée Xepi du point de trajectoire gauche pour lequel le paramètre i=1, et le paramètre j=1.

On nomme Xepi211, la valeur de la coordonnée Xepi2 du point de trajectoire gauche pour lequel le paramètre i=1, et le paramètre j=1.

Lorsque l'angle des roues est strictement négatif, on détermine la valeur de rognage dynamique Xepimax de la façon suivante.

Si XepiNM $\geq$ Xepi11 alors la valeur Xepimax est égale à la valeur d'initialisation.

Si XepiNM < Xepi11 alors la valeur Xepimax est donnée par l'équation suivante :

$$\text{Xepimax} = \text{xepiNM}/2 \qquad\qquad (Eq.32)$$

Lorsque l'angle des roues est strictement positif, on détermine la valeur de rognage dynamique Xepimax de la façon suivante :

Si Xepi2NM $\leq$ Xepi211 alors la valeur Xepimax est égale à la valeur d'initialisation.

Si Xepi2NM > Xepi211 alors la valeur Xepimax est donnée par l'équation suivante :

$$\text{Xepimax} = \max\big((\text{Xepi2NM} - \text{width2}),\ (\text{width1} - \text{Xepi2NM})/2\big) \ (Eq.33)$$

Avec :

> width1 : la largeur en pixels de l'image issue de la caméra avant rognage
> width2 : la largeur en pixels de l'image attendue après rognage pour affichage.

Par exemple, la valeur width1 peut être de 640 pixels et la valeur width2 de 480 pixels.

Lorsque l'angle des roues est nul, on choisit une valeur de rognage dynamique Xepimax égale à une valeur d'initialisation de manière à ce que les gabarits statiques soient centrés sur l'image rognée.

Cette valeur d'initialisation est choisie lorsque l'angle des roues est nul, de manière à ce que les gabarits statiques soient centrés sur l'image rognée et à ce que la largeur de l'image de la caméra avant ajoutée à la largeur de la vue à 360° soit égale à la largeur de l'image de sortie du calculateur d'affichage des trajectoires.

Au cours d'une troisième image, on réalise le rognage de l'image en fonction de la valeur Xepimax déterminée à la deuxième étape.

Si Xepimax est égale à la valeur d'initialisation, l'image est rognée de Xepimax de chaque côté.

Si Xepimax n'est pas égale à la valeur d'initialisation, l'image est rognée de Xepimax à gauche et de width1-(Xepimax+width2) à droite.

De façon optionnelle, on peut informer le conducteur du caractère dynamique du rognage, en modifiant la couleur ou l'opacité de la trajectoire intérieure par rapport à celle de la trajectoire intérieure lorsque le rognage est statique.

## Revendications

1. Procédé d'aide à la conduite en marche avant d'un véhicule automobile, muni d'un capteur d'angle des roues avant, d'un écran d'affichage et d'une caméra à objectif de type fish-eye disposée à l'avant du véhicule et dirigée de façon colinéaire à la direction longitudinale du véhicule de sorte à acquérir des images à l'avant du véhicule, **caractérisé par le fait qu'**il comprend les étapes suivantes :

   > on détermine la trajectoire des roues avant du véhicule en fonction de l'angle des roues avant et des caractéristiques du véhicule constituées de la largeur du véhicule, la distance entre l'essieu avant et le point le plus avancé du véhicule et l'empattement des roues avant,
   > on détermine une valeur de rognage de l'image acquise par la caméra en fonction des trajectoires des roues avant, de l'angle du volant, de la dimension du capteur de la caméra et de la dimension de l'écran d'affichage,
   > on détermine l'image rognée acquise par la caméra à afficher sur l'écran d'affichage en fonction de la trajectoire des roues avant et de la valeur de rognage, et
   > on affiche la trajectoire des roues avant du véhicule en superposition de l'image rognée sur l'écran d'affichage.

2. Procédé selon la revendication 1, dans lequel, pour déterminer le rognage des trajectoires des roues avant lorsque l'angle des roues avant est strictement négatif,
   on détermine si la coordonnée, selon un axe parallèle au sol et perpendiculaire à la direction longitudinale du véhicule, du premier point de la trajectoire gauche est supérieure à la coordonnée correspondante du dernier point de la trajectoire gauche,

si tel est le cas, on détermine que la valeur de rognage est égale à une valeur prédéterminée,

si tel n'est pas le cas, on détermine que la valeur de rognage est égale à la moitié de la coordonnée, selon un axe parallèle au sol et perpendiculaire à la direction longitudinale du véhicule, du dernier point de la trajectoire gauche.

3. Procédé selon la revendication 1, dans lequel, pour déterminer le rognage des trajectoires des roues avant lorsque l'angle des roues avant est strictement positif,

on détermine si la coordonnée, selon un axe parallèle au sol et perpendiculaire à la direction longitudinale du véhicule, du premier point de la trajectoire droite est supérieure à la coordonnée correspondante du dernier point de la trajectoire droite,

si tel est le cas, on détermine que la valeur de rognage est égale à une valeur prédéterminée,

si tel n'est pas le cas, on détermine que la valeur de rognage est égale à la plus grande valeur parmi la différence entre la coordonnée, selon un axe parallèle au sol et perpendiculaire à la direction longitudinale du véhicule, du dernier point de la trajectoire gauche et la largeur en pixels de l'image attendue après rognage pour affichage, et, la moitié de la différence entre la largeur en pixels de l'image issue de la caméra avant rognage et la coordonnée, selon un axe parallèle au sol et perpendiculaire à la direction longitudinale du véhicule, du dernier point de la trajectoire gauche.

4. Procédé selon l'une quelconque des revendications 2 ou 3, dans lequel, si la valeur de rognage est égale à la valeur d'initialisation, on rogne l'image acquise par la caméra de la valeur de rognage de chaque côté, et, si la valeur de rognage n'est pas égale à la valeur d'initialisation, on rogne l'image acquise par la caméra de la valeur de rognage à gauche et de la largeur en pixels de l'image issue de la caméra avant rognage moins la somme de la valeur de rognage et de la largeur en pixels de l'image attendue après rognage pour affichage à droite.

5. Procédé selon l'une quelconque des revendications précédentes, dans lequel, pour déterminer la trajectoire des roues avant du véhicule,

on détermine dans le plan d'appui des roues du véhicule les coordonnées des points de la trajectoire des roues avant du véhicule en fonction de la largeur du véhicule, de la distance entre l'essieu avant et le point le plus avancé du véhicule, de l'empattement des roues avant, et de l'angle de la roue,

on détermine ensuite la projection de chaque point des trajectoires dans le plan d'appui des roues du véhicule sur une sphère dont le centre est fonction des coordonnées du centre de la caméra et de l'angle d'inclinaison de la caméra avec l'horizontale, et

on détermine ensuite la projection des points des trajectoires projetés sur la sphère sur le plan focal unitaire défini comme normal à l'axe de prise de vue de la caméra et situé à une distance de la caméra égale à la distance focale de la caméra.

6. Procédé selon la revendication 5, dans lequel on réalise une transformation affine des points des trajectoires dans le plan focal unitaire en fonction de la taille horizontale du capteur de la caméra, de la taille verticale du capteur de la caméra, du nombre de pixels du capteur de la caméra selon la direction horizontale et du nombre de pixels du capteur de la caméra selon la direction verticale.

**Patentansprüche**

1. Fahrerassistenzverfahren im Vorwärtsgang eines Kraftfahrzeugs, das mit einem Winkelsensor der Vorderräder, einem Anzeigebildschirm und einer Kamera mit Fish-Eye-Objektiv versehen ist, die vor dem Fahrzeug angeordnet und kollinear zur Längsrichtung des Fahrzeugs ausgerichtet ist, um Bilder vor dem Fahrzeug zu erfassen, **dadurch gekennzeichnet, dass** es die folgenden Schritte enthält:

die Spur der Vorderräder des Fahrzeugs wird abhängig vom Winkel der Vorderräder und von den Merkmalen des Fahrzeugs bestimmt, die aus der Breite des Fahrzeugs, dem Abstand zwischen der Vorderachse und dem am weitesten vorne liegenden Punkt des Fahrzeugs und dem Achsabstand der Vorderräder bestehen,

ein Beschneidungswert des von der Kamera erfassten Bilds wird abhängig von den Spuren der Vorderräder, vom Lenkradwinkel, von der Abmessung des Sensors der Kamera und von der Abmessung des Anzeigebildschirms bestimmt,

das von der Kamera erfasste, auf dem Anzeigebildschirm anzuzeigende beschnittene Bild wird abhängig von der Spur der Vorderräder und vom Beschneidungswert bestimmt, und

die Spur der Vorderräder des Fahrzeugs wird in Überlagerung des beschnittenen Bilds auf dem Anzeigebildschirm angezeigt.

2. Verfahren nach Anspruch 1, wobei, um das Beschneiden der Spuren der Vorderräder zu bestimmen, wenn der Winkel der Vorderräder strikt negativ ist,
bestimmt wird, ob die Koordinate, gemäß einer Achse parallel zum Boden und lotrecht zur Längsrichtung des Fahrzeugs, des ersten Punkts der linken Spur größer als die entsprechende Koordinate des letzten Punkts der linken Spur ist, wenn dies der Fall ist, bestimmt wird, dass der Beschneidungswert gleich einem vorbestimmten Wert ist,
wenn dies nicht der Fall ist, bestimmt wird, dass der Beschneidungswert gleich der Hälfte der Koordinate, gemäß einer Achse parallel zum Boden und lotrecht zur Längsrichtung des Fahrzeugs, des letzten Punkts der linken Spur ist.

3. Verfahren nach Anspruch 1, wobei, um das Beschneiden der Spuren der Vorderräder zu bestimmen, wenn der Winkel der Vorderräder strikt positiv ist,
bestimmt wird, ob die Koordinate, gemäß einer Achse parallel zum Boden und lotrecht zur Längsrichtung des Fahrzeugs, des ersten Punkts der rechten Spur größer als die entsprechende Koordinate des letzten Punkts der rechten Spur ist,
wenn dies der Fall ist, bestimmt wird, dass der Beschneidungswert gleich einem vorbestimmten Wert ist,
wenn dies nicht der Fall ist, bestimmt wird, dass der Beschneidungswert gleich dem größten Wert unter der Differenz zwischen der Koordinate, gemäß einer Achse parallel zum Boden und lotrecht zur Längsrichtung des Fahrzeugs, des letzten Punkts der linken Spur und der Breite in Pixeln des nach dem Beschneiden zur Anzeige erwarteten Bilds, und der Hälfte der Differenz zwischen der Breite in Pixeln des von der Kamera stammenden Bilds vor dem Beschneiden und der Koordinate, gemäß einer Achse parallel zum Boden und lotrecht zur Längsrichtung des Fahrzeugs, des letzten Punkts der linken Spur ist.

4. Verfahren nach einem der Ansprüche 2 oder 3, wobei, wenn der Beschneidungswert gleich dem Initialisierungswert ist, das von der Kamera erfasste Bild um den Beschneidungswert auf jeder Seite beschnitten wird, und wenn der Beschneidungswert nicht gleich dem Initialisierungswert ist, das von der Kamera erfasste Bild um den Beschneidungswert links und um die Breite in Pixeln des von der Kamera vor dem Beschneiden stammenden Bilds minus die Summe des Beschneidungswerts und der Breite in Pixeln des nach dem Beschneiden erwarteten Bilds zur Anzeige rechts beschnitten wird.

5. Verfahren nach einem der vorhergehenden Ansprüche, wobei zur Bestimmung der Spur der Vorderräder des Fahrzeugs
in der Auflageebene der Räder des Fahrzeugs die Koordinaten der Punkte der Spur der Vorderräder des Fahrzeugs abhängig von der Breite des Fahrzeugs, vom Abstand zwischen der Vorderachse und vom am weitesten vorne liegenden Punkt des Fahrzeugs, vom Achsabstand der Vorderräder und vom Winkel des Rads bestimmt werden, anschließend die Projektion jedes Punkts der Spuren in der Auflageebene der Räder des Fahrzeugs auf eine Kugelfläche bestimmt wird, deren Mitte von den Koordinaten der Mitte der Kamera und vom Neigungswinkel der Kamera mit der Horizontalen abhängt, und
anschließend die Projektion der auf die Kugelfläche projizierten Punkte der Spuren auf die Einheitsbrennebene bestimmt wird, die als normal zur Bildaufnahmeachse der Kamera definiert wird und sich in einem Abstand zur Kamera gleich der Brennweite der Kamera befindet.

6. Verfahren nach Anspruch 5, wobei eine affine Transformation der Punkte der Spuren in der Einheitsbrennebene abhängig von der waagrechten Größe des Sensors der Kamera, der senkrechten Größe des Sensors der Kamera, der Anzahl von Pixeln des Sensors der Kamera gemäß der waagrechten Richtung und der Anzahl von Pixeln des Sensors der Kamera gemäß der senkrechten Richtung durchgeführt wird.

**Claims**

1. Method assisting with driving in forwards gear a motor vehicle equipped with a front-wheels angle sensor, with a display screen and with a camera with a fisheye lens positioned at the front of the vehicle and pointing in a direction colinear with the longitudinal direction of the vehicle so as to capture images at the front of the vehicle, **characterized in that** it comprises the following steps:

it determines the path of the front wheels of the vehicle as a function of the angle of the front wheels and of the characteristics of the vehicle which consist of the width of the vehicle, the distance between the front axle and the forwardmost point of the vehicle and the wheelbase between the front wheels,

it determines a crop value by which to crop the image captured by the camera as a function of the paths of the front wheels, of the steering wheel angle, of the dimension of the sensor of the camera and of the dimension of the display screen,

it determines the cropped image captured by the camera that is to be displayed on the display screen as a function of the path of the front wheels and of the crop value, and

it displays the path of the front wheels of the vehicle as an overlay on the cropped image on the display screen.

2. Method according to Claim 1, in which, in order to determine the cropping of the paths of the front wheels when the angle of the front wheels is strictly negative,

the method determines whether the coordinate, along an axis parallel to the ground and perpendicular to the longitudinal direction of the vehicle, of the first point on the left-hand path is greater than the corresponding coordinate of the last point on the left-hand path,

if it is, the method determines that the crop value is equal to a predetermined value,

if it is not, the method determines that the crop value is equal to half the coordinate, along an axis parallel to the ground and perpendicular to the longitudinal direction of the vehicle, of the last point on the left-hand path.

3. Method according to Claim 1, in which, in order to determine the cropping of the paths of the front wheels when the angle of the front wheels is strictly positive,

the method determines whether the coordinate, along an axis parallel to the ground and perpendicular to the longitudinal direction of the vehicle, of the first point on the right-hand path is greater than the corresponding coordinate of the last point on the right-hand path,

if it is, the method determines that the crop value is equal to a predetermined value,

if it is not, the method determines that the crop value is equal to the greatest value of: the difference between the coordinate, along an axis parallel to the ground and perpendicular to the longitudinal direction of the vehicle, of the last point on the left-hand path and the width, in pixels, of the image expected after cropping for display; and half the difference between the width, in pixels, of the image from the camera before cropping and the coordinate, along an axis parallel to the ground and perpendicular to the longitudinal direction of the vehicle, of the last point on the left-hand path.

4. Method according to either one of Claims 2 and 3, in which, if the crop value is equal to the initialization value, the image captured by the camera is cropped on each side by the crop value and, if the crop value is not equal to the initialization value, the image captured by the camera is cropped on the left by the crop value and cropped on the right by the width, in pixels, of the image from the camera before cropping minus the sum of the crop value and the width, in pixels, of the image expected after cropping for display.

5. Method according to any one of the preceding claims, in which, in order to determine the path of the front wheels of the vehicle,

the method determines, in the bearing plane of the wheels of the vehicle, the coordinates of the points on the path of the front wheels of the vehicle as a function of the width of the vehicle, of the distance between the front axle and the forwardmost point of the vehicle, of the wheelbase between the front wheels, and of the angle of the wheel,

the method then determines the projection of each point on the paths in the bearing plane of the wheels of the vehicle onto a sphere the centre of which is a function of the coordinates of the centre of the camera and of the angle of inclination of the camera with respect to the horizontal, and

the method then determines the projection of the points on the paths projected onto the sphere, onto the individual focal plane defined as being normal to the axis of image capture of the camera and situated at a distance from the camera that is equal to the focal length of the camera.

6. Method according to Claim 5, in which the method performs an affine transformation of the points on the paths in the individual focal plane as a function of the horizontal size of the sensor of the camera, of the vertical size of the sensor of the camera, of the number of pixels of the sensor of the camera in the horizontal direction, and of the number of pixels of the sensor of the camera in the vertical direction.

**RÉFÉRENCES CITÉES DANS LA DESCRIPTION**

**Documents brevets cités dans la description**

- US 20130321629 A
- US 2013057690 A
- US 2008266137 A
- EP 2500216 A
- EP 2981077 A